# EUROPEAN PATENT APPLICATION

(11) **EP 1 206 054 A2**
(43) Date of publication of application: **15.05.2002**
(21) Application number: 01126612.9
(22) Date of filing: 07.11.2001
(51) Int. Cl.: H04B 7/26

(54) **Wireless communication network and wireless communication apparatus**

(30) Priority: 07.11.2000 JP 2000339601
(71) Applicant: NEC CORPORATION, Tokyo (JP)
(72) Inventor: Matsuda, Jun-ichi, Minato-ku, Tokyo (JP)
(74) Representative: Betten & Resch

(57) **Abstract**

A wireless communication network (181) includes wireless repeaters (15,16) having radio irradiating surfaces. The wireless repeaters are fixed so that the radio irradiating surfaces thereof are adhered to two surfaces of a wall (19) and, thereby, a wireless connection (110) is established by setting the wall as a radio transmitting medium. The wireless communication network connects wired communication networks (13,14), thereby structuring an indoor network.

## Description

### BACKGROUND OF THE INVENTION

### 1. Field of the Invention

The present invention relates to a wireless communication network and a wireless communication apparatus which are suitable for an indoor communication network.

### 2. Description of the Related Art

In recent years, demands for the high-speed network are increased due to the high performance of terminal equipment and the high-speed and the large capacity of data processed by the terminal equipment. A network based on an IEEE 1394 standard (hereinafter, referred to as a 1394 bus) is known as one example of the networks with the high transmission speed. A personal computer, peripheral devices such as a hard disk and a printer, audiovisual appliances, and the like can be connected to this network.

The transmission speed of the 1394 bus is greatly fast, e.g., 100 Mbps, 200 Mbps, or 400 Mbps. Via the 1394 bus, real-time data such as video data can be transmitted. Further, the 1394 bus corresponds to a plug and play and hot plug-in. As a consequence, when another terminal equipment based on the IEEE 1394 standard (hereinafter, referred to 1394 terminal equipment) is connected to the 1394 bus and the 1394 terminal equipment is disconnected to the 1394 bus, the 1394 bus is automatically configured again. Hence, a user never needs to set the 1394 terminal equipment or the like. Incidentally, the length of a cable for connecting the 1394 terminal equipment is 4.5m at the maximum length.

It is expected that the 1394 bus having the above-mentioned features is an infrastructure of a home network. It is necessary to connect the 1394 buses installed at different rooms so as to construct the home network using the 1394 bus. However, currently, there is a problem in that a plurality of repeaters are necessary to connect the plurality of pieces of 1394 terminal equipment which are installed apart from each other by 4.5m or more. To solve this problem, a standard for extending transmission distance is specified in a p1394b draft standard which is prepared for standardization by an IEEE p1394b committee. According to the standardization, the transmission distance is extended to be 100m at the maximum length. A transmitting medium in this case uses a UTP (Unshielded Twisted Pair), a POF (Plastic Optical Fiber), or a GOF (Glass Optical Fiber).

By performing a construction for installation to wire a cable to a wall or a ceiling by using the UTP, POF, or GOF specified in the p1394b draft standard, the 1394 buses which are installed at different rooms can easily be connected. However, the construction for installing the cable, itself, arises a serious barrier against the install of a home network into an existing house. A method for connecting the 1394 buses installed at the different rooms by using radio without installing the cable, in place of the cable for connecting the rooms, is considered. However, similarly to the transmission speed of the 1394 bus, the radio transmission speed needs to be 100 Mbps or more.

Among examples for connecting the 1394 buses at different rooms, using sub-millimeter or millimeter radio frequency which is capable of fast data transmission, an example using a 60 GHz radio frequency is known. This example is described in a Journal of "Nikkei Electronics", published May 8, 2000, pp. 137 to 142.

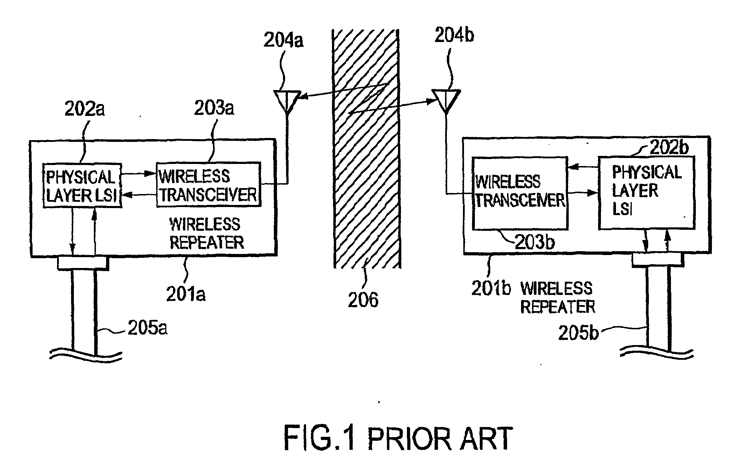

An example of a conventional wireless communication network is described with reference to Fig. 1. Fig. 1 shows the concept of a method for connecting rooms by using a wireless repeater of the 60 GHz. On the wireless communication network, wireless repeaters 201a and 201b are installed at two rooms which are partitioned by a wall 206. The wireless repeaters 201a and 201b for peer-to-peer corresponding communication are installed to be opposed to each other while sandwiching the wall 206.

The wireless repeater 201a comprises a physical layer LSI 202a, a wireless transceiver 203a, and an antenna 204a. Also, the wireless repeater 201 b comprises a physical layer LSI 202b, a wireless transceiver 203b, and an antenna 204b. The physical layer LSI 202a in the wireless repeater 201a converts an electrical signal, which is inputted from twist pair lines 205a with a feeder line prescribed in the IEEE1394 standard, and outputs the converted signal to the wireless transceiver 203a. Further, the physical layer LSI 202a in the wireless repeater 201a converts an electrical signal, which is inputted from the wireless transceiver 203a, and outputs the converted signal to the twist pair lines 205a with the feeder line. The wireless transceiver 203a converts the converted signal into a wireless signal, transmits it to a space via the antenna 204a, converts the radio signal received by the antenna 204a into an electrical signal, and outputs the converted signal to the physical layer LSI 202a.

The physical layer LSI 202b in the wireless repeater 201b converts an electrical signal, which is inputted from twist pair lines 205b with a feeder line prescribed in the IEEE1394 standard, and outputs the converted signal to the wireless transceiver 203b. Further, the physical layer LSI 202b in the wireless repeater 201 b converts the electrical signal, which is inputted from the wireless transceiver 203b. and outputs the converted signal to the twist pair lines 205b with the feeder line. The wireless transceiver 203b converts the converted signal into a radio signal, transmits it to a space via the antenna 204b, converts the radio signal received via the antenna 204b Into an electrical signal, and outputs the converted signal to the physical layer LSI 202b.

The above-mentioned wireless communication network has a problem in that in the case of structuring an indoor network, in particular, a home network by connecting fast wired networks, the home network cannot easily be structured by using a wireless communication apparatus.

Because when one wireless communication apparatus is installed, the position of another wireless communication apparatus as a communication partner is invisible due to the partitions such as a wall, a ceiling, and a floor. It is difficult that the installed positions of the two wireless communication apparatus are precisely matched so that they are opposed to each other while sandwiching the partition. When the sub-millimeter or millimeter frequency is used for implementing the fast wireless communication network, the connection is disconnected if a radio transmitting path is shut out by the human body or the like.

### SUMMARY OF THE INVENTION

It is an object of the present invention to provide a wireless communication network in which in the case of structuring an indoor network, in particular, a home network by wired networks installed at plurality of rooms, the home network is easily structured without additional wiring between rooms.

It is another object of the present invention to provide a wireless communication apparatus capable of implementing the above-mentioned wireless communication network.

It is a further object of the present invention to provide a wireless communication network for a home network, in which the disconnection of a radio transmitting path due to the human body is prevented.

It is a still further object of the present invention to provide a wireless communication apparatus capable of realizing the above-mentioned wireless communication network.

According to one aspect of the present invention, there is provided a wireless communication network for communication between first and second rooms separated by a partition, comprising first and second wireless communication apparatuses having radio irradiating surfaces, wherein the partition has a first surface facing the first room and a second surface facing the second room, and the first wireless communication apparatus is installed so that the radio irradiating surface thereof is adhered to the first surface of the first room, the second wireless communication apparatus is installed so that the radio irradiating surface thereof is adhered to the second surface of the second room and, thus, the first and second wireless communication apparatuses establish a wireless connection by setting the partition as a radio transmitting medium.

Preferably, according to the present invention, the first and second wireless communication apparatuses may respectively have transmitting antennas and receiving antennas in which, when an irradiating angle or an angle of field of view is equal to 0° and ± 45° , an antenna gain is equal to a predetermined value or more.

Preferably, according to the present invention, the first and second wireless communication apparatuses may respectively transmit and receive a radio signal whose carrier frequency is 10 GHz or more, via the wireless medium. However, preferably, the carrier signal may range 55 GHz to 65 GHz.

Preferably, according to the present invention, each of the first and second wireless communication apparatuses may comprise a first physical layer circuit for communicating data via the wired medium, and a second physical layer circuit for communicating data via the wireless medium, and a repeater function is implemented by communicating data between the first physical layer circuit and the second physical layer circuit.

Preferably, according to the present invention, each of the first and second wireless communication apparatuses may comprise a third physical layer circuit for communicating data via the wired medium, a fourth physical layer circuit for communicating data via the wireless medium, and a data link layer circuit for processing data inputted by the third physical layer circuit every data frame and outputting it to the fourth physical layer circuit, and processing data inputted by the fourth physical layer circuit every data frame and outputting to it the third physical layer circuit, and the data link layer circuit outputs only data to be outputted to the third or fourth physical layer circuit to implement a bridge function.

Preferably, according to the present invention, one of the first and second wireless communication apparatuses may comprise a first physical layer circuit for communicating data via the wired medium, and a second physical layer circuit for communicating data via the wireless medium, and the first physical layer circuit transmits data to the second physical layer circuit to implement a repeater function, and wherein the other of the first and second wireless communication apparatuses may comprise a third physical layer circuit for communicating data via the wired medium, a fourth physical layer circuit for transmitting data via the wireless medium, and a data link layer circuit for processing data inputted by the third physical layer circuit every data frame and outputting it to the fourth physical layer circuit, and processing data inputted by the fourth physical layer circuit every data frame and outputting it to the third physical layer circuit, and the data link layer circuit outputs only data to be outputted to the third or fourth physical layer circuit to implement a bridge function.

Preferably, according to the present invention, the wired communication network may be a network which uses the serial bus based on an IEEE 1394 standard.

According to a second aspect of the present invention, there is provided a wireless communication apparatus, comprising a signal intensity display unit for displaying an intensity of a signal which is received from the wireless medium, wherein the apparatus is used for the wireless communication network.

According to a third aspect of the present invention, there is provided a wireless communication apparatus, comprising a first directivity control unit for controlling a directivity of the receiving antenna so that an intensity of a radio signal received via the receiving antenna is maximum, wherein the apparatus is used for the wireless communication network.

Preferably, according to the present invention, the wireless communication apparatus further may comprise an angle display unit for displaying an acute angle formed by the first surface or the second surface of the partition to which the apparatus is installed, and a direction in which an antenna gain of the receiving antenna is maximum.

Preferably, according to the present invention, the wireless communication apparatus may further comprise an adjusting direction display unit for displaying a direction in which closer to 90° is an acute angle formed by the first surface or the second surface of the partition to which the apparatus is installed, and a direction in which an antenna gain of the receiving antenna is maximum.

Preferably, according to the present invention, the wireless communication apparatus may further comprise a second directivity control unit for controlling the directivity of the transmitting antenna so that it matches the directivity of the receiving antenna.

According to a fourth aspect of the present invention, there is provided a wireless communication apparatus comprising a first physical layer circuit for transmitting data to a wired communication network; and a second physical layer circuit for transmitting data via a wireless connection, wherein a repeater function is implemented by transmitting data between the first physical layer circuit and the second physical layer circuit.

According to a fifth aspect of the present invention, there is provided a wireless communication apparatus, comprising a third physical layer circuit for transmitting data to a wired communication network, a fourth physical layer circuit for transmitting data via a wireless connection, and a data link layer circuit for processing data inputted by the third physical layer circuit every data frame and outputting it to the fourth physical layer circuit, and processing data inputted by the fourth physical layer circuit every data frame and outputting it to the third physical layer circuit, and the data link layer circuit outputs only data to be outputted to the third or fourth physical layer circuit to implement a bridge function.

Preferably, according to the present invention, the wireless communication apparatus may further comprise a transmitting antenna, and a receiving antenna, wherein in the transmitting antenna and the receiving antenna, when an irradiating angle or an angle of field of view is equal to 0° and ± 45° , an antenna gain is equal to a predetermined value or more.

Preferably, according to the present invention, the wireless communication apparatus may further comprise a frequency filter for preventing the reception of a signal having the same radio as radio transmitted by the apparatus.

Preferably, according to the present invention, the wireless communication apparatus may have a radio irradiating surface and can be fixed by adhering the radio irradiating surface to a partitioning surface.

### BRIEF DESCRIPTION OF THE DRAWINGS

Fig. 1 is a diagram showing an example of the structure of a conventional wireless communication network;
Fig. 2 is a block diagram showing an example of the structure of a home network having a wireless communication network according to a first embodiment of the present invention;
Fig. 3 is a block diagram showing the structure of two wireless repeaters shown in Fig. 2;
Fig, 4 is a diagram showing an example of characteristics of a transmitting antenna and a receiving antenna which are shown In Fig. 3;
Fig. 5 is a diagram showing an example of the structure of a wall shown in Fig. 2;
Fig. 6 is a block diagram showing an example of the structure of another home network to which the wireless communication network is applied according to the first embodiment;
Fig. 7 is a block diagram showing an example of the structure of a home network having a wireless communication network according to a second embodiment of the present invention;
Fig. 8 is a block diagram showing the structure of two wireless repeaters shown in Fig. 7;
Fig. 9 is a block diagram showing an example of the structure of another home network to which the wireless communication network is applied according to the second embodiment;
Fig. 10 is a block diagram showing an example of the structure of a home network having a wireless communication network according to a third embodiment of the present invention;
Fig. 11 is a block diagram of two wireless bridges shown in Fig. 10;
Fig. 12 is a block diagram showing an example of the structure of a home network having a wireless communication network according to a fourth embodiment of the present invention;
Fig. 13 is a block diagram showing the structure of two wireless bridges shown in Fig. 12;
Fig. 14 is a block diagram showing an example of the structure of a home network having a wireless communication network according to a fifth embodiment of the present invention;
Fig. 15 is a block diagram showing the structure of two wireless bridges shown in Fig. 14;
Fig. 16 is a block diagram showing the structure of a wireless repeater according to a sixth embodiment of the present invention;
Fig. 17 is a block diagram showing the structure of a wireless repeater according to a seventh embodiment of the present invention;
Fig. 18 is a diagram for explaining the working for positioning two wireless repeaters having one structure shown in Fig. 17; and
Fig. 19 is a block diagram showing another structure of the wireless repeater according to the seventh embodiment.

### DESCRIPTION OF THE PREFERRED EMBODIMENTS

### First embodiment

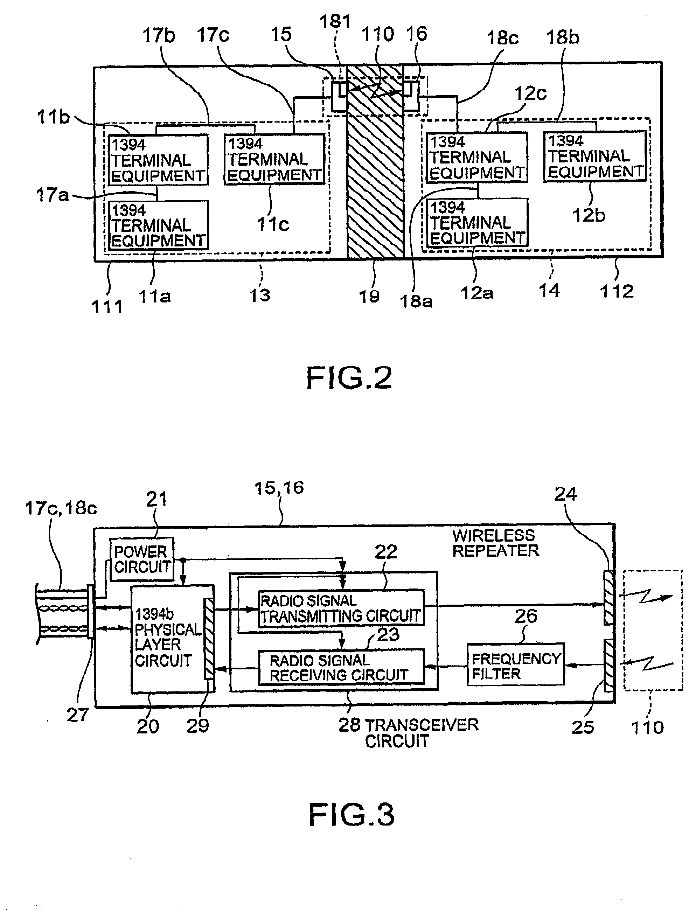

A home network having a wireless communication network 181 is described according to a first embodiment of the present invention with reference to Fig. 2. Referring to Fig. 2, in a wired communication network 13, a plurality of 1394 terminal equipments 11a, 11b, and 11c are connected via twist pair lines 17a, 17b, and 17c with feeder lines, which conform to the IEEE1394 standard. In a wired communication network 14, a plurality of 1394 terminal equipments 12a, 12b, and 12c are connected via twist pair lines 18a, 18b, and 18c with feeder lines, which conform to the IEEE1394 standard. The wired communication networks 13 and 14 are based on the IEEE1394 standard and are installed to rooms 111 and 112 which are partitioned by a wall 19.

A wireless repeater (wireless communication apparatus) 15 is connected to the wired communication network 13 via the twist pair lines 17c with the feeder line. The wireless repeater 15 is fixedly arranged so that a surface for irradiating radio (shown by an inside rectangle) is adhered to a surface of the wall 19, facing the room 111. A wireless repeater (wireless communication apparatus) 16 is connected to the wired communication network 14 via the twist pair lines 18c with the feeder line. The wireless repeater 16 is fixedly arranged so that a surface for irradiating radio (shown by an inside rectangular shape) is adhered to a surface of the wall 19, facing the room 112. The wireless repeaters 15 and 16 use the wall 19 as a radio transmitting medium to establish a wireless connection 110, and perform peer-to-peer corresponding communication via the wireless connection 110.

According to the first embodiment of the present invention, the wireless communication network 181 comprises the wireless repeaters 15 and 16 and the wall 19, and functions as a network for connecting the wired communication network 13 to the wired communication network 14. Since the two wired communication networks 13 and 14 are connected via the wireless communication network 181, the 1394 terminal equipments 11a to 11c, and the 1394 terminal equipments 12a to 12c, and the wireless connection 110 are connected via a single bus. As a consequence, the home network is structured as shown in Fig. 2.

Fig. 3 is a block diagram showing the structure of the wireless repeater 15 (16) shown in Fig. 2. Referring to Fig. 3, the wireless repeater 15 (16) comprises a 1394b physical layer circuit 20, a power circuit 21, a transceiver circuit 28, a transmitting antenna 24, a receiving antenna 25, a frequency filter 26, and a metallic connector 27. The twist pair lines 17c (18c) with the feeder line is connected to the metallic connector 27. The wireless repeater 15 (16) can be fixed by adhering the radio irradiating surface to the partition (the wall, the floor, or the ceiling) with a fitting or an adhering manner. As shown in Fig. 3, in the wireless repeater 15 (16), the transmitting antenna 24 and the receiving antenna 25 are installed on the wall 19 side. Incidentally, the 1394b physical layer circuit 20 corresponds to a first physical layer circuit and the transceiver circuit 28 corresponds to a second physical layer circuit.

The 1394b physical layer circuit 20 comprises a receiving and transmitting port 29 and receives two-system parallel signal from the twist pair lines 17c (18c) with the feeder line. The 1394b physical layer circuit 20 converts all received signals into serial signals, outputs them to the transceiver circuit 28 via the receiving and transmitting port 29. Further, the 1394b physical layer circuit 20 converts all the serial signals inputted from the transceiver circuit 28 via the receiving and transmitting port 29 into two-system parallel signals, and transmits them to the twist pair lines 17c (18c) with the feeder line. As a consequence, a repeater function can be realized.

The power circuit 21 distributes a voltage supplied from the feeder line of the twist pair lines 17c (18c) with the feeder line to circuits.

The transceiver circuit 28 comprises a radio signal transmitting circuit 22 and a radio signal receiving circuit 23. The radio signal transmitting circuit 22 converts an electrical signal, which is inputted by the 1394b physical layer circuit 20, into a raid signal, and transmits the converted signal to the wireless connection 110 via the transmitting antenna 24. The radio signal receiving circuit 23 converts a radio signal, which is received from the wireless connection 110 via the receiving antenna 25 and the frequency filter 26, and outputs the converted signal to the 1394b physical layer circuit 20.

A reflecting signal is caused by reflecting the radio signal transmitted to the wireless connection 110 from the transmitting antenna 24 to the surface of the wall 19 in front of the transmitting antenna 24. The wireless repeaters 15 and 16 need to prevent an adverse effect which is caused by receiving the reflecting signal by the radio signal receiving circuit 23. Therefore, the wireless repeaters 15 and 16 transmit radio signals having different frequencies, respectively. In the wireless repeaters 15 and 16, the frequency filter 26 is provided at the last-stage of the receiving antenna 25. The frequency filter 26 shuts out a signal having the same frequency as radio transmitted by the wireless repeaters itself and, thereby, only a signal having the frequency of the radio transmitting by the communication partner passes.

A frequency band (carrier frequency) 60 GHz (ranging 55 GHz to 65 GHz) is used for radio which is transmitted to the wireless connection 110 from the transmitting antenna 24 by the radio signal transmitting circuit 22 so that necessary and sufficient band is ensured for communication between the wired communication networks 13 and 14. The transceiver circuit 28 has a transmitting output of 0 dBm, as a transmitting capacity, and a reception sensitivity -42 dBm as a receiving capacity, and has an operating speed of 500 Mbps or more. Accordingly, the wireless repeaters 15 and 16 realize the data transmission at the maximum transmission speed prescribed in the IEEE1394 standard. Preferably, the radio signal transmitting circuit 22 may use a carrier frequency of 10 GHz or more.

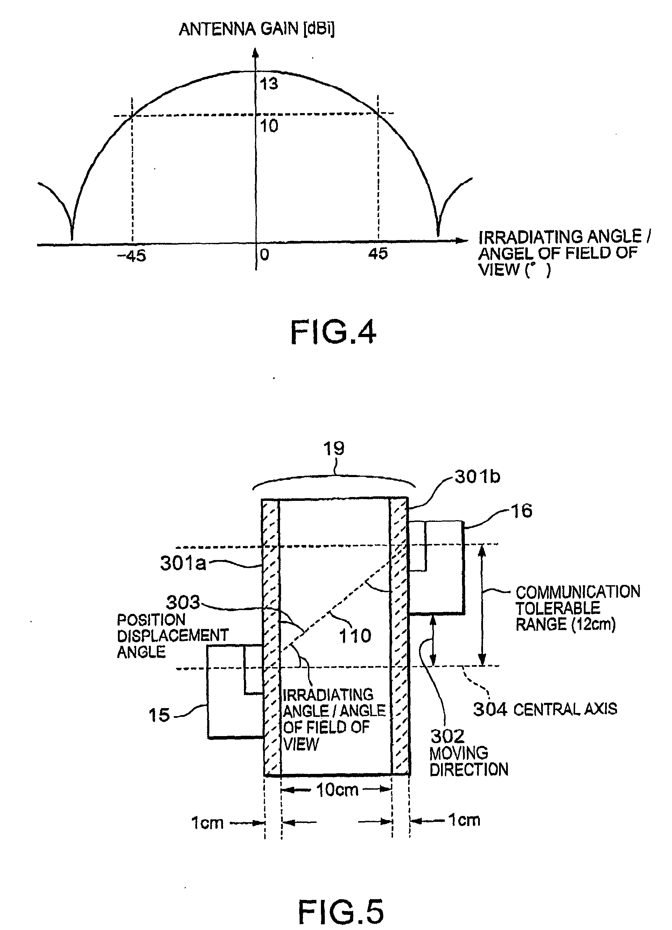

Fig. 4 is a diagram showing one example of characteristics of the transmitting antenna 24 and the receiving antenna 25 shown in Fig. 3, in which a relationship between an antenna gain, and an irradiating angle or an angle of field of view is represented. Referring to Fig. 4, the transmitting antenna 24 and the receiving antenna 25 have an antenna gain of 13 dBi when the irradiating angle or the angle of field of view is 0° and has an antenna gain of 10 dBi when it is ± 45° . As mentioned above, when the irradiating angle or the angle of field of view is 0° and ± 45° , preferably, the transmitting antenna 24 and the receiving antenna 25 incorporated in the wireless repeaters 15 and 16 use antennas having a wide directivity such that the antenna gain is equal to a predetermined value or more.

A tolerable range of displacement between the installed positions of the wireless repeaters 15 and 16 is described with reference to Fig. 5. Fig. 5 is a diagram showing an example of the structure of the wall 19 on which the wireless repeaters 15 and 16 are installed. Referring to Fig. 5, the wall 19 comprises plaster boards 301a and 301b which have a width of 1 cm. A space having a width of 10 cm is provided between the plaster boards 301a and 301 b. That is, the thickness of the wall 19 is 12 cm. The wireless repeater 15 is installed to be adhered to the plaster board 301a and the wireless repeater 16 is installed to be adhered to the plaster board 301 b.

It is assumed that the wireless repeater 15 is fixed and the wireless repeater 16 is moved along a moving direction 302 on a surface of the plaster board 301 and the wide directivity of the transmitting antenna 24 and the receiving antenna 25 enables the communication between the wireless repeaters 15 and 16 up to a position of a distance of 12 cm from a central axis 304. In this case, a communication tolerable range within a circle having a radius of 12 cm from the central axis 304 as center. The wireless repeaters 15 and 16 can mutually be communicated within the above communication tolerable range. When the wireless repeaters 15 and 16 are installed to the wall 19, they may be positioned within the communication tolerable range without accurately determining the installed position in the conventional manner such that they are opposed to each other. As a consequence, according to the first embodiment, the wireless repeaters 15 and 16 can easily be installed.

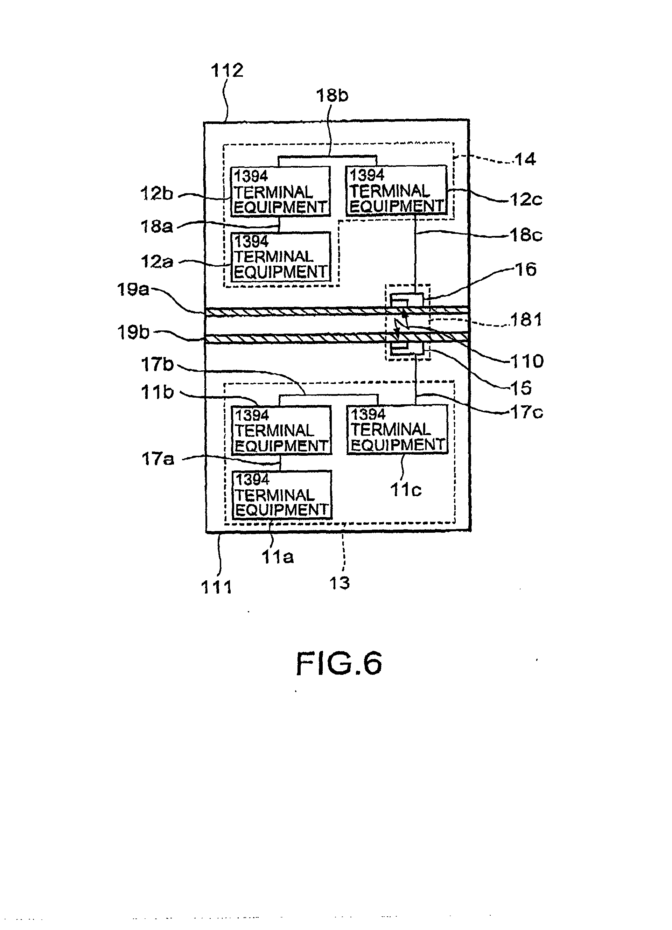

Fig. 6 shows an example of the structure of another home network to which the wireless communication network 181 is applied according to the first embodiment. In the home network shown in Fig. 6, the wired communication networks 13 and 14 are installed in a downstairs room 111 and at an upstairs room 112, respectively. Referring to Fig. 6, the same portions as those in Fig. 2 are designated by the same reference numerals and the description is omitted.

As shown in Fig. 6, the wireless repeater 15 is installed so that a radio irradiating surface thereof is adhered to a ceiling 19b and the wireless repeater 16 is installed so that the radio irradiating surface thereof is adhered to the floor 19a. The wireless repeaters 15 and 16 may be installed so that they are opposed to each other within the communication tolerable range. Thus, even if the wired communication networks 13 and 14 are individually installed at the downstairs room 111 and the upstairs room 112, the wireless communication network 181 can connect the wired communication network 13 at the downstairs room 111 and the wired communication network 14 at the upstairs room 112.

According to the first embodiment of the present invention, the wireless communication network 181 comprises the wireless repeaters 15 and 16 and the partitions (the wall 19, the floor 19a, and the ceiling 19b) to which the wireless repeaters 15 and 16 are adhered and installed. Consequently, as shown in Figs. 2 and 6, when the wired communication networks 13 and 14 installed at a plurality of rooms are connected via the wireless communication network 181 and the home network is thus structured, the wireless repeaters 15 and 16 may be installed to the partitions so that they are positioned within the communication tolerable range. As a consequence, the home network can easily be structured without additional wiring at a plurality of rooms.

For the transmitting antenna 24 and the receiving antenna 25 in the wireless repeaters 15 and 16, a necessary antenna gain is ensured and antennas having a wide directivity is used. Thereby, the communication tolerable range becomes wider and the wireless repeaters 15 and 16 can easily be positioned.

Further, the wireless repeaters 15 and 16 are installed so that the radio irradiating surfaces thereof are adhered to the partition, that is, the partition is used as a radio transmitting medium. Thus, the stable wireless communication network can be realized to prevent the disconnection of the radio transmitting path by the human body.

Furthermore, the distance between the wireless repeaters 15 and 16 is short because it corresponds to, approximately, the thickness of the partition, and the transmitting outputs of the ratio repeaters 15 and 16 can be suppressed. Advantageously, power consumption of the wireless repeater can be reduced.

### Second embodiment

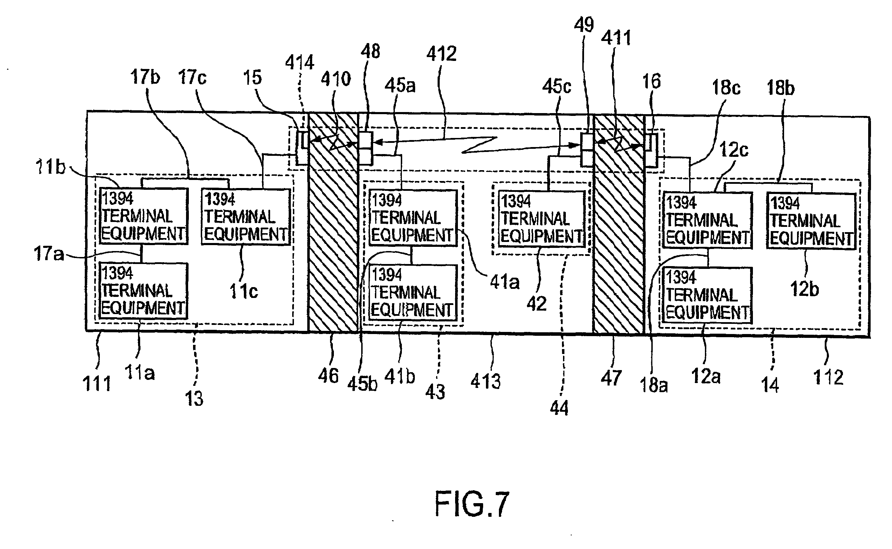

A description is given of a home network having a wireless communication network 414 according to a second embodiment of the present invention with reference to Fig. 7. Referring to Fig. 7, the same portions as those in Fig. 2 are designated by the same reference numerals and the description is omitted. As shown in Fig. 7, the rooms 111 and 112 are partitioned by walls 46 and 47 and a room 413. The room 413 has wired communication networks 43 and 44 both of which are based on the IEEE1394 standard. In the wired communication network 43, a plurality of 1394 terminal equipments 41 a and 41 b are connected via twist pair lines 45b with a feeder line. The wired communication network 44 comprises a 1394 terminal equipment 42.

The wired communication network 43 is connected to a wireless repeater 48 (wireless communication apparatus) via twist pair lines 45a with a feeder line, and the wired communication network 44 is connected to a wireless repeater 49 (wireless communication apparatus) via twist pair lines 45c with a feeder line. The wireless repeaters 15, 16, 48, and 49 mutually perform the communication via wireless connection 410, 411, and 412. Consequently, the communication via the wireless communication network 414 can be realized. The wireless communication network 414 connects the wired communication networks 13, 14, 43, and 44, thereby connecting the 1394 terminal equipments 11a to 11c, the 1394 terminal equipments 12a to 12c, the 1394 terminal equipments 41a and 41b, the 1394 terminal equipment 42, and the wireless connection 410 to 412 to a single bus. As a consequence, the home network shown in Fig. 7 is structured.

The wireless repeaters 15 and 48 establish the wireless connection 410 by using a wall 46 as a radio transmitting medium, and the wireless repeaters 16 and 49 establish the wireless connection 411 by using a wall 47 as a radio transmitting medium. The wireless repeaters 48 and 49 establish the wireless connection 412 by using a space in the room 413 as a radio transmitting medium.

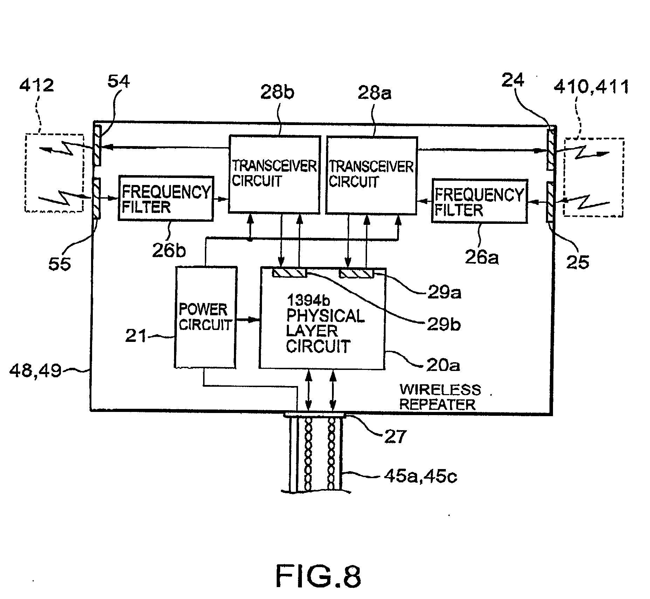

Fig. 8 shows the structure of the wireless repeater 48 (49) shown in Fig. 7. Referring to Fig. 8, the wireless repeater 48 (49) comprises the power circuit 21, the transmitting antenna 24, the receiving antenna 25, the metallic connector 27, frequency filters 26a and 26b, a 1394b physical layer circuit 20a, transceiver circuits 28a and 28b, a transmitting antenna 54 for intra-room communication, and a receiving antenna 55 for intra-room communication. As shown in Fig. 8, the same portions as those in Fig. 3 are designated by the same reference numerals and the description is omitted. The frequency filters 26a and 26b correspond to the frequency filter 26 in Fig. 3, and the transceiver circuits 28a and 28b correspond to the transceiver circuit 28 in Fig. 3. The 1394b physical layer circuit 20a corresponds to a first physical layer circuit and the transceiver circuits 28a and 28b correspond to second physical layer circuits.

The 1394b physical layer circuit 20a has receiving and transmitting ports 29a and 29b. The 1394b physical layer circuit 20a converts two-system parallel signals, which are received from the twist pair lines 45a (45c) with the feeder line, into a serial signal, and outputs it to the transceiver circuits 28a and 28b via the receiving and transmitting ports 29a and 29b. Further, the 1394b physical layer circuit 20a converts the serial signal, which is inputted via the receiving and transmitting ports 29a and 29b, into two-system parallel signals, and outputs them to the twist pair lines 45a (45c) with the feeder line. The 1394b physical layer circuit 20a outputs the serial signal, which is inputted from one of the receiving and transmitting ports 29a and 29b, to the other of receiving and transmitting ports 29a and 29b.

In the wireless communication network 414 in Fig. 7, the wireless repeaters 48 and 49 have an arrangement such that the transmitting antenna 54 for intra-room communication and the receiving antenna 55 for intra-room communication are directed to the inside of the room 413. The wireless repeaters 48 and 49 are arranged to be opposed to each other and perform communication via the wireless connection 412.

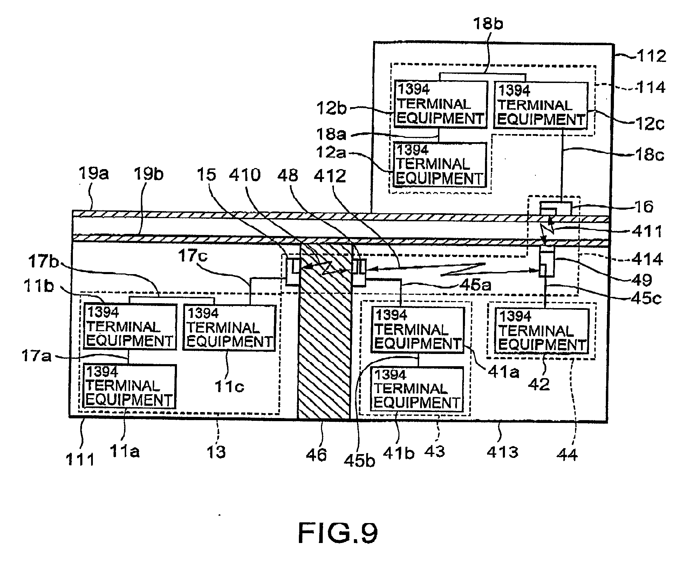

Fig. 9 shows another home network to which the wireless communication network 414 is applied according to the second embodiment. In the home network shown in Fig. 9, the wired communication networks 13, 43, and 44 are installed at the downstairs rooms 111 and 413, and the wired communication network 14 is installed at the upstairs room 112. In Fig. 9, the same portions as those in Fig. 7 are designated by the same reference numerals and the description is omitted.

As shown in Fig. 9, the wireless repeater 49 is installed so that one side of a radio irradiating surface thereof (on the antennas 24 and 25 side in Fig. 8) is adhered to the ceiling 19b of the room 413. The wireless repeater 16 is installed so that the radio irradiating surface thereof is adhered to the floor 19a of the room 112. As a consequence, the home network similar to that in Fig. 7 is structured.

According to the second embodiment of the present invention. the wireless repeater 48 (49) in the wireless communication network 414 comprises two transceiver circuits 28a and 28b, the receiving and transmitting antennas 24, 25, 54, and 55, and the wireless repeater 48 (49) irradiates radio in two directions. In the wireless repeater 48 (49), one radio irradiating surface thereof is adhered to the partition (the wall 46, the floor 19a, or the ceiling 19b), and the other radio irradiating surface thereof is directed to the inside of the room. Thus, the wireless repeaters 48 and 49 installed at the same room perform communication via the wireless connection 412.

Accordingly, even if a plurality of the wired communication networks 13, 14, 43, and 44 are installed, via the partition, at different rooms which are not adjacent, they can be connected. In other words, the home network can easily be structured, irrespective of the positional relationship of the rooms.

### Third embodiment

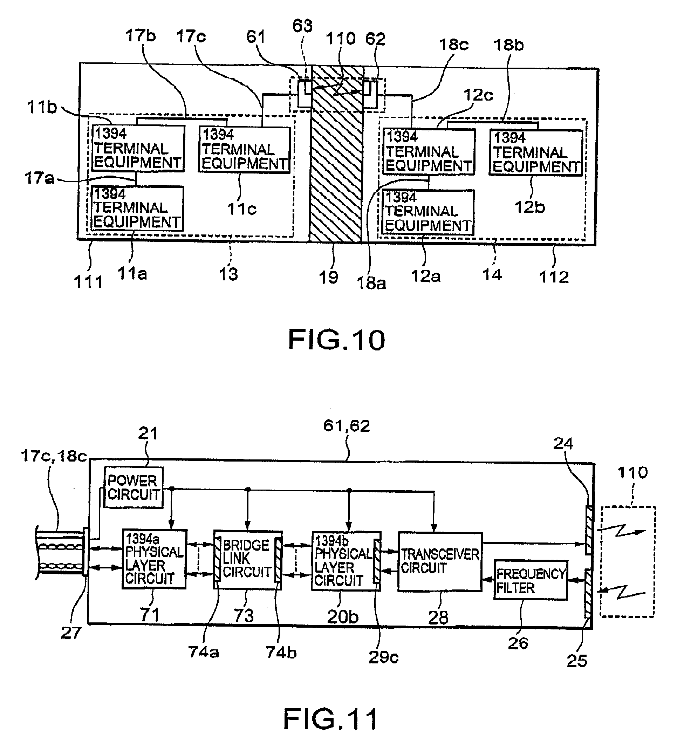

Fig. 10 shows a home network having a wireless communication network 63 according to a third embodiment of the present invention. The same portions in Fig. 10 as those in Fig. 2 are designated by the same reference numerals and the description is omitted. Referring to Fig. 10, differently from the wireless communication network 181 shown in Fig. 2, the wireless communication network 63 has wireless bridges 61 and 62 as wireless communication apparatuses, in place of the wireless repeaters 15 and 16. The wireless bridges 61 and 62 establish the wireless connection 110 by using the wall 19 as a radio transmitting medium, and perform peer-to-peer corresponding communication via the wireless connection 110. Thus, the wireless communication network 63 is connected to the wired communication networks 13 and 14 and the home network shown in Fig. 10 is structured.

When the rooms 111 and 112 have the positional relationship shown in Fig. 6, a radio irradiating surface of the wireless bridge 61 is adhered to the ceiling 19b (in Fig. 6) and a radio irradiating surface of the wireless bridge 62 is adhered to the floor 19a (in Fig. 6) so that the wireless bridges 61 and 62 are opposed to each other. The wired communication networks 13 and 14 can be connected.

Fig. 11 is a block diagram showing the wireless bridge 61 (62) in Fig. 10. Referring to Fig. 11, the wireless bridge 61 (62) comprises the power circuit 21, the transceiver circuit 28, the transmitting antenna 24, the receiving antenna 25, the frequency filter 26, the metallic connector 27, a 1394a physical layer circuit 71, a 1394b physical layer circuit 20b, and a bridge link circuit 73. Twist pair lines 17c (18c) are connected to the metallic connector 27. The wireless bridge 61 (62) can be fixed by adhering a radio irradiating surface thereof to a partition (such as a wall, a floor, or a ceiling) with a fitting or an adhering manner.

Incidentally, the 1394a physical layer circuit 71 corresponds to a third physical layer circuit, the transceiver 28 and the 1394b physical layer circuit 20b correspond to a fourth physical layer circuit, and the bridge link circuit 73 corresponds to a data link layer circuit.

The 1394a physical layer circuit 71 converts two-system parallel signals, which are received from the twist pair line 17c (18c) the feeder line via the metallic connector 27, into eight-system parallel signals at the maximum level, and outputs the converted signal to the bridge link circuit 73. Further, the 1394a physical layer circuit 71 converts the eight-system parallel signals at the maximum level, which is inputted by the bridge link circuit 73, into two-system parallel signals, and outputs the converted signal to the twist pair lines 17c (18c) with the feeder line via the metallic connector 27.

The 1394b physical layer circuit 20b has the receiving and transmitting port 29c. The 1394b physical layer circuit 20b converts the serial signal, which is inputted from the transceiver circuit 28 via the receiving and transmitting port 29c, into eight-system parallel signals at the maximum level, and outputs the converted signal to the bridge link circuit 73. Further, the 1394b physical layer circuit 20b converts eight-system parallel signals, which are inputted from the bridge link circuit 73, into a serial signal, and outputs the converted signal into the transceiver circuit 28 via the reoeiving and transmitting port 29c.

The bridge link circuit 73 comprises ports 74a and 74b. The bridge link circuit 73 performs an operation for bridging an input signal from the 1394b physical layer circuit 20b to the 1394a physical layer circuit 71. in which the 1394a physical layer circuit 71 and the 1394b physical layer circuit 20b are connected to different buses. More particularly, the bridge link circuit 73 analyzes a signal, which is inputted via the port 74a, every data frame, and outputs only a signal to be outputted to the port 74b to the port 74b. The bridge link circuit 73 analyzes a signal, which is inputted from the port 74b, every data frame, and outputs only a signal to be outputted to the port 74a to the port 75a. Thus, a bridge function is realized. By the bridge circuit 73, all of the wired communication networks 13 and 14 and the wireless communication network 63 shown in Fig. 10 are connected as different buses, respectively.

According to the third embodiment of the present invention, the wireless bridges 61 and 62 in the wireless communication network 63 perform the communication via the wireless connection 110, thus connecting the wired communication networks 13 and 14. However, all of the wired communication networks 13 and 14 and the wireless communication network 63 are connected as different buses. The 1394 terminal equipments 11a to 11c, the 1394 terminal equipments 12a to 12c, and the wireless connection 110 are connected to different buses, respectively. In addition to the advantages according to the first embodiment which are obtained in Fig. 2, the following advantages can be obtained. That is, even if the bus is initialized by pulling out the 1394 terminal equipment in one of the wired communication networks 13 and 14, the initialization of the bus has no effect on the other wired communication network.

Moreover, since only the signal to be transmitted by the wireless bridges 61 and 62 is transmitted to the wireless connection 110, resources of the wireless connection 110 can effectively be used.

According to the third embodiment, the wireless communication network 63 may be structured by replacing one of the wireless bridges 61 and 62 in Fig. 10 with the wireless repeater 15 (16) in Fig. 3. Accordingly, by structuring the wireless communication network 63 with the wireless repeater, costs for home network can be reduced because the wireless repeater is more inexpensive than those for the wireless bridges 61 and 62.

### Fourth embodiment

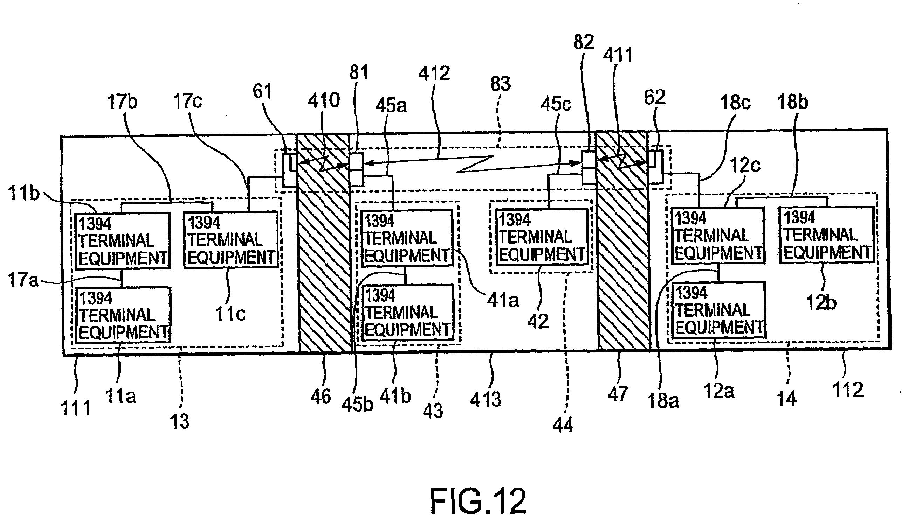

Fig. 12 shows an example of a home network having a wireless communication network 83 according to a fourth embodiment of the present invention. The same portions in Fig. 12 as those in Fig. 7 are designated by the same reference numerals and the description is omitted. Referring to Fig. 12, differently from the wireless communication network 414 in Fig. 7, the wireless communication network 83 comprises the wireless bridges (wireless communication apparatus) 61 and 62 in Fig. 11, in place of the wireless repeaters 15 and 16, and further comprises wireless bridges (wireless communication apparatus) 81 and 82, in place of the wireless repeaters 48 and 49. The wireless bridges 81 and 82 establish a wireless connection 412 by using a space in the room 413 as a radio transmitting medium. Consequently, the wireless communication network 83 individually connects the wired communication networks 13, 14, 43, and 44, and the home network in Fig. 12 is structured.

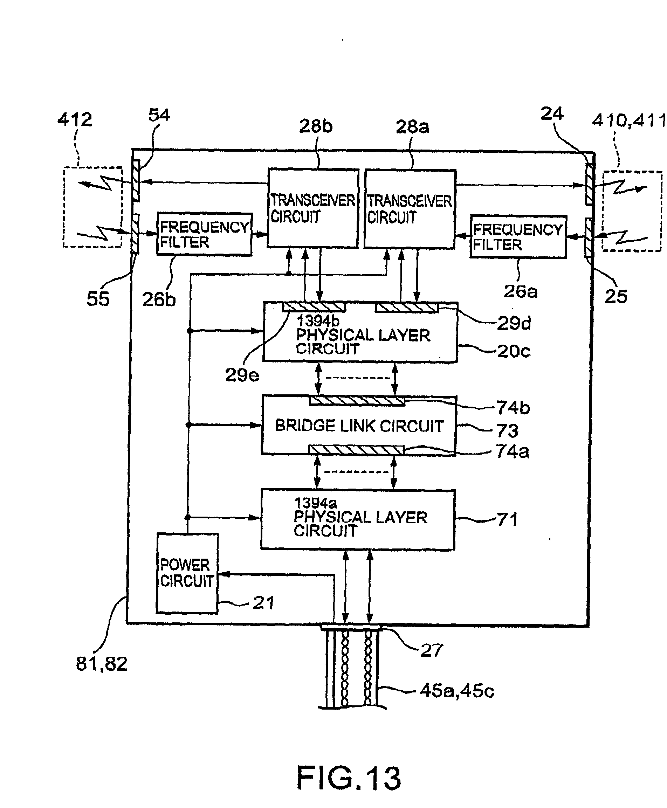

Fig. 13 shows the structure of the wireless bridge 81 (82) shown in Fig. 12. Referring to Fig. 13, the wireless bridge 81 (82) comprises the 1394a physical layer circuit 71, the 1394b physical layer circuit 20c, the bridge link circuit 73, the power circuit 21, the transceiver circuits 28a and 28b, the frequency filters 26a and 26b, the transmitting antenna 24, the receiving antenna 25, the transmitting antenna 54 for intra-room communication, and the receiving antenna 55 for intra-room communication. The wireless bridge 81 (82) has the 1394b physical layer circuit 20c in the wireless repeater in Fig. 8, in place of the 1394b physical layer circuit 20a, and further has the 1394a physical layer circuit 71 and the bridge link circuit 73 in Fig. 11. The same portions in Fig. 13 as those in Fig. 8 are designated by the same reference numerals and the description is omitted.

Incidentally, the 1394a physical layer circuit 71 corresponds to a third physical layer circuit, the transceiver circuits 28a and 28b and the 1394b physical layer circuit 20c correspond to a fourth physical layer circuit, and the bridge link circuit 73 corresponds to a data link layer circuit.

The 1394b physical layer circuit 20c has receiving and transmitting ports 29d and 29e. The 1394b physical layer circuit 20c converts eight-system parallel signals, at the maximum level, which are inputted by the bridge link circuit 73 into a serial signal, and outputs the converted signal to the transceiver circuits 28a and 28b via the receiving and transmitting ports 29d and 29e. The 1394b physical layer circuit 20c converts the serial signal, which is inputted via one of the receiving and transmitting ports 29d and 29e, into eight-system parallel signals at the maximum level, and outputs the converted signal to the bridge link circuit 73. Further, the 1394b physical layer circuit 20c outputs the serial signal, which is inputted via the one of receiving and transmitting ports 29e and 29d, to the other of the receiving and transmitting ports 29e and 29d.

The wireless bridge 81 (82) connects the wired communication networks 13 (14) and 43 (42) and the wireless communication network 83 by using the bridge link circuit 73 as different buses, respectively.

According to the fourth embodiment of the present invention, the wireless bridges 61, 62, 81, and 82 in the wireless communication network 83 perform the communication via the wireless connections 410 to 412, thus connecting the wired communication networks 13, 14, 43, and 44. The wired communication networks 13, 14, 43, and 44 and the wireless communication network 83 are connected as different buses. Consequently, the 1394 terminal equipments 11a to 11c, the 1394 terminal equipments 12a to 12c, the 1394 terminal equipments 41 a and 41 b, the 1394 terminal equipment 42, and the wireless connections 410 to 412 are connected to different buses.

In addition to the advantages in Fig. 7 obtained according to the second embodiment, the following advantages are obtained. That is, even if the bus is initialized due to pulling out the 1394 terminal equipment in any of the wired communication networks 13, 14, 43, and 44, the initialization of the bus has no effect on other wired communication networks.

Further, since the wireless bridges 81 and 82 transmit, only a signal to be transmitted to the wireless connection 412 thereby, resources of the wireless connection 412 can effectively be used.

### Fifth embodiment

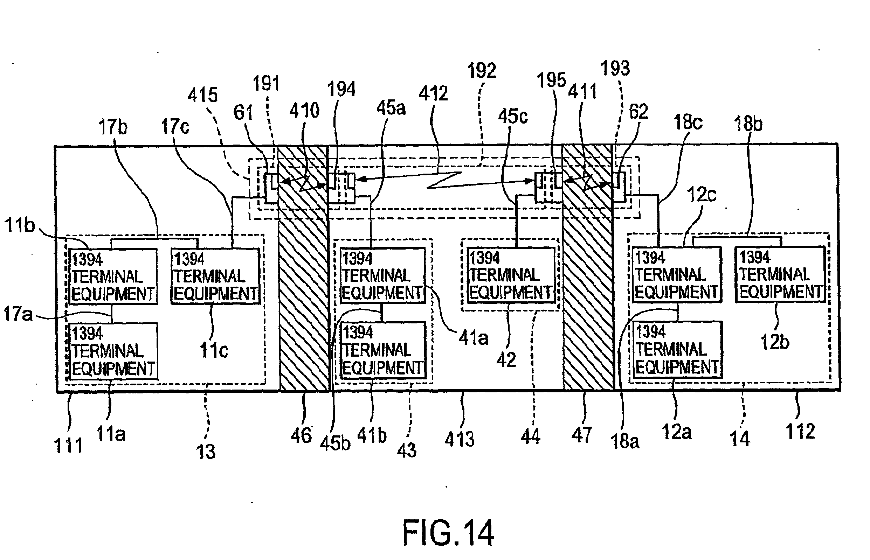

Fig. 14 shows an example of the structure of a home network having a wireless communication network 415 according to a fifth embodiment of the present invention. The same portions in Fig. 14 as those in Fig. 12 are designated by the same reference numerals and the description is omitted. Referring to Fig. 14, differently from the wireless communication network 83 in Fig. 12, the wireless communication network 415 has wireless bridges (wireless communication apparatus) 194 and 195, in place of the wireless bridges 81 and 82, and further has three wireless communication networks 191, 192, and 193.

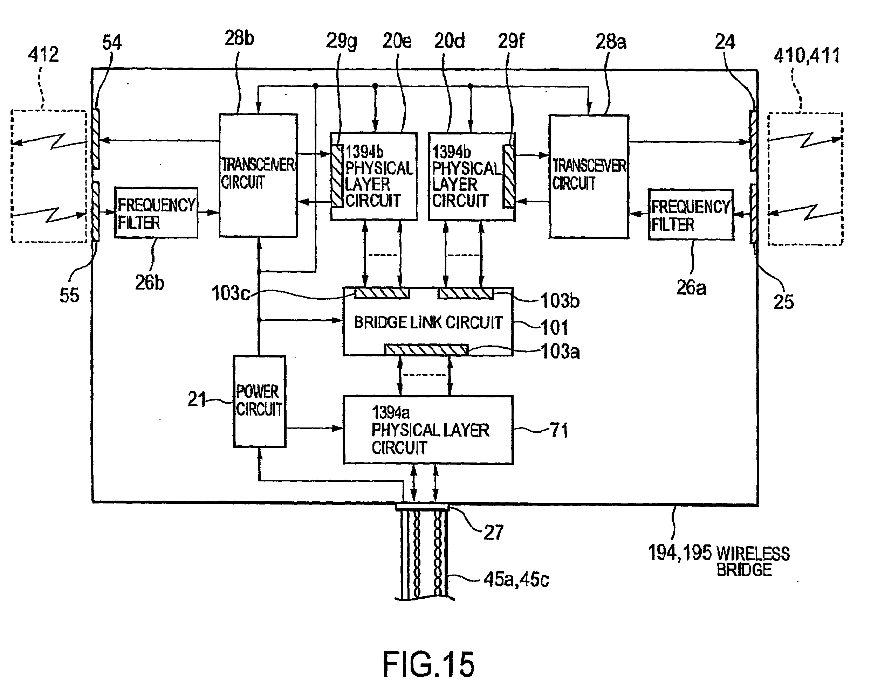

Fig. 15 shows the structure of the wireless bridge 194 (195) shown in Fig. 14. In the wireless bridge in Fig. 13, the wireless bridge 194 (195) in Fig. 15 has a bridge link circuit 101, in place of the bridge link circuit 73, and further has 1394b physical layer circuits 20d and 20e, in place of the 1394b physical layer circuit 20c. Incidentally, the 1394a physical layer circuit 71 corresponds to a third physical layer circuit, the transceiver circuits 28a and 28b and the 1394b physical layer circuits 20d and 20e correspond to a fourth physical layer circuit, and the bridge link circuit 101 corresponds to a data link layer circuit.

The bridge link circuit 101 comprises ports 103a, 103b, and 103c. The bridge link circuit 101 performs an operation for bridging an input signal from the 1394a physical layer circuit 71 to the 1394b physical layer circuits 20d and 20e, in which the 1394a physical layer circuit 71 and the 1394b physical layer circuits 20d and 20e are connected to different buses. That is, the bridge link circuit 101 analyzes eight-system parallel signals at the maximum level, which are inputted from the ports 103a to 103c, every data frame, selects to which of the ports 103a to 103c, the parallel signals are outputted and outputs the eight-system parallel signals at the maximum level via the selected port.

In the wireless communication network 415 in Fig. 14, the wireless bridges 61 and 194 perform communication via the wireless connection 410 and the wireless communication network 191 is thus structured. The wireless bridges 194 and 195 perform communication via the wireless connection 412 and the wireless communication network 192 is thus structured. Further, the wireless bridges 195 and 62 perform communication via the wireless connection 411 and the wireless communication network 193 is thus structured. Theses wireless communication networks 191 to 193 connect the wired communication networks 13, 14, 43, and 44.

According to the fifth embodiment of the present invention, the wireless bridges 61, 62, 194, and 195 in the wireless communication network 415 perform communication via the wireless connections 410 to 412, the wireless communication networks 191 to 193 are thus structured, and the wired communication networks 13, 14, 43, and 44 are connected. Consequently, the wired communication networks 13, 14, 43, and 44 and the wired communication network 415 are connected as individual buses. The 1394 terminal equipments 11a to 11c, the 1394 terminal equipments 12a to 12c, the 1394 terminal equipments 41 a and 41 b, the 1394 terminal equipment 42, and the wireless connections 410 to 412 are connected to different buses, respectively. Thus, the same advantages as those in Fig. 12 according to the fourth embodiment are obtained.

In the fourth and fifth embodiments shown in Figs. 12 and 14, even if the positional relationship among the rooms 111, 112, and 413 corresponds to that in Fig. 9, similarly to the home network in Fig. 9, the wired communication networks at different rooms are connected via the wireless connection and the home network is thus structured. The wireless bridge 62 in this case is installed so that a radio irradiating surface is adhered to the floor 19 in Fig. 9 in the room 112. The wireless bridge 82 or 195 is installed so that a radio irradiating surface thereof is adhered to the ceiling 19b in Fig. 9 in the room 413.

### Sixth embodiment

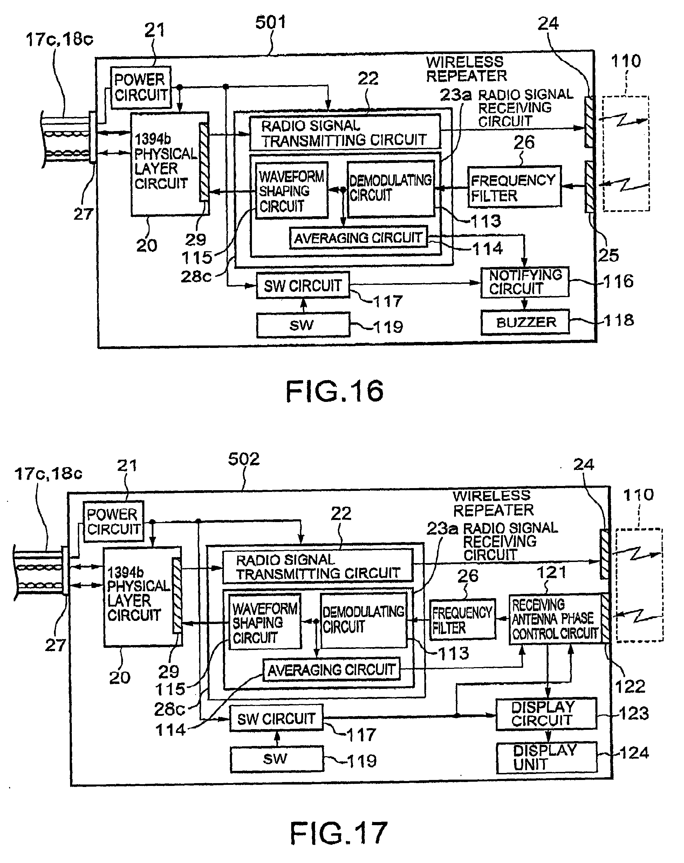

Fig. 16 shows the structure of a wireless repeater (wireless communication apparatus) 501 according to a sixth embodiment of the present invention. Differently from the wireless repeater 15 (16) in Fig. 3, the wireless repeater 501 in Fig. 16 comprises a transceiver circuit 28c, in place of the transceiver circuit 28, and further comprises a notifying circuit 116, a buzzer 118, a switch (hereinafter, referred to as an SW) circuit 117, and an SW 119. Incidentally, the 1394b physical layer circuit 20 corresponds to a first physical layer circuit, and the transceiver circuit 28c corresponds to a second physical layer circuit. The notifying circuit 116 and the buzzer 118 correspond to signal intensity display means.

The transceiver circuit 28c comprises the radio signal receiving circuit 22, which is incorporated in the transceiver circuit 28 in Fig. 3, and the radio signal receiving circuit 23a. The radio signal receiving circuit 23a comprises a demodulating circuit 113, an averaging circuit 114, and a waveform shaping circuit 115.

In the radio signal receiving circuit 23a, the demodulating circuit 113 demodulates a signal inputted from the frequency filter 26. The waveform shaping circuit 115 shapes a waveform of the demodulated signal and outputs it to the 1394b physical layer circuit 20. The demodulated signal is inputted to the averaging circuit 114. The averaging circuit 114 averages the inputted circuit by unit time and inputs it to the notifying circuit 116. The notifying circuit 116 rings the buzzer 118 with a frequency corresponding to a voltage of the inputted signal. As the inputted voltage is higher, the notifying circuit 116 is preset to ring the buzzer 118 with a higher frequency. The SW circuit 117 controls supply of an electric power to the notifying circuit 116 and, only when the SW 119 is in an ON-state, the electric power is supplied to the notifying circuit 116.

Next, a description is given of working for positioning the two wireless repeaters 501 while sandwiching the partition when the wireless repeaters 501 are installed on both sides of the partition by a setting person.

First, the setting person sets the SWs 119 of the two wireless repeaters 501 to be in the ON-state and first sets one of the two wireless repeaters 501. Next, he moves and sets the other repeater 501 at the position at which the buzzers 118 of the two wireless repeaters 501 generate the most treble buzzer sound. After this setting, he sets the SW 119 to be in an OFF-state. Thus, the two wireless repeaters 501 are installed at the best positions where it is the most reception-sensitive.

Although the notifying circuit 116 and the buzzer 118 are used as the signal intensity display means, a level meter may be used in place of the buzzer 118. In this case, the notifying circuit 116 allows the level meter to display the intensity level of the radio signal received, in accordance with the voltage inputted from the averaging circuit 114. Further, in place of the buzzer 118, a plurality of light emitting devices (LEDs) may be used. In this case, the notifying circuit 116 allows the number of LEDs which emit light, to be changed, in accordance with the voltage inputted from the averaging circuit 114.

According to the sixth embodiment of the present invention, the wireless repeater comprises the signal intensity display means for notifying the outside of the signal intensity of the radio signal received by the wireless repeater 501. Consequently, the setting person can easily set the wireless repeater 501 at the most reception-sensitive position based on the notified signal intensity (the level of the buzzer sound, the display of the level meter, or the number of LEDs which emit light).

In the sixth embodiment, the structure and working for the wireless repeater are described as one example. Also, the wireless bridge comprises the signal intensity display means and, thus, the signal intensity of the radio signal received can be notified to the outside and the same advantages as those of the wireless repeater 501 can be obtained.

### Seventh embodiment

Fig. 17 shows the structure of a wireless repeater (wireless communication apparatus) 502 according to a seventh embodiment of the present invention. The wireless repeater 502 in Fig. 17 comprises a receiving antenna phase control circuit 121 in the repeater 501 in Fig. 16, and the receiving antenna 25 uses a phased array antenna composed of a plurality of antenna elements. The receiving antenna phase control circuit 121 controls the directivity of the receiving antenna 25 so that the signal intensity of the signal received from the wireless connection 110 is at the maximum level. The wireless repeater 502 further comprises a display circuit 123 and a display unit 124. A liquid crystal display device or the like realizes the display unit 124.

Incidentally, the 1394b physical layer circuit 20 corresponds to a first physical layer circuit, the transceiver circuit 28c corresponds to a second physical layer circuit. The display circuit 123 and the display unit 124 correspond to angle display means. Further, the receiving antenna phase control circuit 121 corresponds to a first directivity control circuit.

In the wireless repeater 502 in Fig. 17, the electric power is fed to the receiving antenna phase control circuit 121 and the display circuit 123 via the SW circuit 117. Only when the SW 119 is in the ON-state, the SW circuit 117 feeds the electric power. The receiving antenna phase control circuit 121 controls phases of radio signals which can be received by a plurality of antenna elements in the receiving phased array antenna 122 so that the directivity thereof is changed.

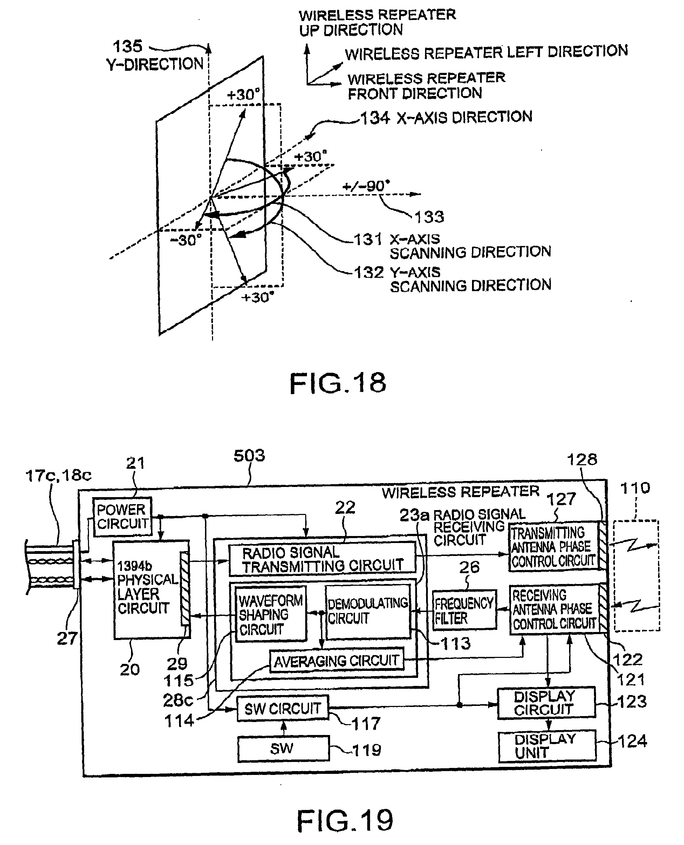

Next, a description is given of working for positioning the two wireless repeaters 502 while sandwiching the partition when the setting person installs the wireless repeaters 502 on both sides of the partition with reference to Figs. 17 and 18. Fig. 18 shows a diagram for explaining the working for positioning the wireless repeaters 502. Referring to Fig. 18, a "+" side in an X-axis direction 134 denotes a left shit direction upon installing the wireless repeaters 502. On the other hand, a "+" side in a Y-axis direction 135 denotes an up shift direction upon installing the wireless repeaters 502. A direction of +/-90° denotes a front side of the wireless repeaters 502.

First, the setting person temporarily installs the two wireless repeaters 502 to be opposed to each other while sandwiching the partition, and the two SWs 119 are in the ON-state. Thus, the receiving antenna phase control circuit 121, to which the electric power is fed, changes a directive angle, as an acute angle, formed by a surface of the partition and a direction such that an antenna gain of the receiving phased array antenna 122 becomes maximum, within +30° to -30° along an X-axis scanning direction 131 in Fig. 18. The averaging circuit 114 notifies the receiving antenna phase control circuit 121 of the signal intensity of the received radio signal and the receiving antenna phase control circuit 121 stores the directive angle of the maximum signal intensity within the notified signal intensities.

When the scanning operation ranging +30° to -30° is completed, the receiving antenna phase control circuit 121 sets the directive angle of the receiving phased array antenna 122 in the X-axis direction 134 to the stored directive angle. The receiving antenna phase control circuit 121 changes the directive angle from +30° to - 30° along a Y-axis scanning direction 132 in Fig. 18 while keeping the setting the directive angle in the X-axis direction 134 and sets the directive angle of receiving phased array antenna 122 in the Y-axis direction 135 to the angle at the maximum signal intensity.

After the setting of the directive angles in the X-axis direction 134 and the Y-axis direction 135 is completed, the receiving antenna phase control circuit 121 notifies the display circuit 123 of the angles in the X-axis direction 134 and the Y-axis direction 135. The display circuit 123 displays the angle notified from the receiving antenna phase control circuit 121 on the display unit 124. The setting person installs the wireless repeaters 502 at the position where the angles displayed on the display unit 124 are the closest to +/-90° . After the installing operation is completed, the setting person switches off the two SWs 119.

Accordingly, the two wireless repeaters 502 are installed at the positions where the directions of the receiving phased array antenna 122 are the closest to a vertical direction (+/-90° direction) 133 of the radio irradiating surfaces of the wireless repeaters 502. That is, the two wireless repeaters 502 are installed at the most reception-sensitive positions.

Although the wireless repeater 502 display the directive angle of the receiving phased array antenna 122 on the display unit 124 according to the seventh embodiment, a direction in which the setting person has to move the wireless repeater 502 may be displayed. In this case, the display circuit 123 and the display unit 124 function as adjusting direction display means. The direction in which the wireless repeater 502 has to be moved means the vertical direction of the radio irradiating surface of the receiving phased array antenna 122, that is, a direction in which the directive angle becomes +/-90°

When the directive angle of the X-axis direction 134 is in the (+)-direction, the display circuit 123 as the adjusting direction display means displays a left-directed arrow on the display unit 124. On the contrary, when the directive angle of the X-axis direction 134 is in the ()-direction, the display circuit 123 displays a right-directed arrow on the display unit 124. When the directive angle of the Y-axis direction 135 is in the (+)-direction. the display circuit 123 displays an up-directed arrow on the display unit 124. On the contrary, when the directive angle of the Y-axis direction 135 is in the (-)-direction, the display circuit 123 displays a down-directed arrow on the display unit 124. The display unit circuit 123 changes the length of the arrows, which is displayed, in accordance with the directive angles in the X-axis direction 134 and the Y-axis direction 135. When the directive angle is +/-90° , the display circuit 123 sets the length of the arrow to be 0 and, when the directive angle is +/-30° , the display circuit 123 sets the length of the arrow to be the longest. When it is determined that no radio signal is inputted to the receiving phased array antenna 122, the display circuit 123 displays the right- and left-directed-arrows and the up- and down-directed arrows on the display unit 124.

According to the seventh embodiment of the present invention, the wireless repeater 502 comprises the display circuit 123 and the display unit 124, as angle display means, that display in which the direction of the radio irradiating surface and at which degree the direction of the radio irradiating surface the wireless repeaters 502 are displaced from the vertical direction of the radio irradiating surface on the display unit 124. As a consequence, the setting person can easily install the two wireless repeaters 502 at the most reception-sensitive position based on the direction of displacement which are displayed on the display unit 124.

The display circuit 123 and the display unit 124 function as adjusting direction display means and the display circuit 123 displays the direction, in which the wireless repeater 502 is moved, on the display unit 124. Thus, the setting person can obtain the advantage such that the two wireless repeaters 502 can be installed at the most reception-sensitive positions.

Further, the wireless repeater 502 comprises the receiving antenna phase control circuit 121 so that the directive angle of the receiving phased array antenna 122 is set to be proper. Thus, even if the setting person installs the wireless repeaters 502 at imprecise opposed positions, the wireless repeaters 502 can perform communication by establishing the wireless connection as long as the positions thereof are displaced within the communication tolerable range.

Fig. 19 shows another example of the wireless repeater according to the seventh embodiment. A wireless repeater (wireless communication apparatus) 503 in Fig. 19 is structured by adding a transmitting antenna phase control circuit 127 to the wireless repeater 502 in Fig. 17. Further, the transmitting antenna 24 uses a phased array antenna, and the transmitting antenna phase control circuit 127 controls the directivity of the transmitting phased array antenna 128 so that it matches the directivity of the receiving phased array antenna 122. Incidentally, the 1394b physical layer circuit 20 corresponds to a first physical layer circuit, the transceiver circuit 28c corresponds to a second physical layer circuit. The display circuit 123 and the display unit 124 correspond to angle display means. Further, the receiving antenna phase control circuit 121 corresponds to a first directivity control circuit. The transmitting antenna phase control circuit 127 corresponds to second directivity control means.

When the setting of the direction of the receiving phased array antenna 122 is completed similarly to the case of the wireless repeater 502 in Fig. 17, the receiving antenna phase control circuit 121 in the wireless repeater 503 notifies the set angles in the X-direction 134 and the set angle in the Y-direction 135 of the transmitting antenna phase control circuit 127. In response to the notification, the transmitting antenna phase control circuit 127 adjusts the direction of the transmitting phased array antenna 128 to match the angle notified from the receiving antenna control circuit 121 by adjusting the phase of the transmitted radio signal.

As a consequence, even if the wireless repeaters 503 are installed at imprecise opposed positions, the communication tolerable range can be wide to perform communication by establishing the wireless connection.

Although the structure and working for the wireless repeater is described as one example according to the seventh embodiment, the same advantages as those of the wireless repeaters 502 and 503 can be obtained if the structure and the working for the wireless bridge is implemented.

Although the first to seventh embodiments of the present invention are described above, the specific construction is not limited to this and the modification for design can be incorporated in the present Invention without departing the essential of the present invention.

In the present invention, the first and second wireless communication apparatuses establish the wireless connection by setting the partition as the radio transmitting medium. Thus, if the home network is structured by connecting the wired communication networks installed at a plurality of rooms via the wireless communication network, the first and second wireless communication apparatuses may be positioned within the communication tolerable range and be set to the partition. The home network can easily be structured without additional wired at a plurality of rooms. Further, the stable wireless communication network can be realized without disconnecting the radio transmitting path due to the human body.

Since the distance between the first and second wireless communication apparatuses is enough the thickness of the partition, the distance can be shortened and the transmitting output of the first and second wireless communication apparatuses can be suppressed. Advantageously, the power consumption of the first and second wireless communication apparatuses can be reduced.

Moreover, the first and second wireless communication apparatuses comprise the transmitting antenna and the receiving antenna in which the antenna gain is equal to a predetermined value or more when the irradiating angle or the angle of field of view is 0° or ± 45°. Therefore, the communication tolerable range is wide and the first and second wireless communication apparatuses can easily be positioned.

A plurality of wired communication networks connected via the wireless communication network and the wireless communication network are connected as respective buses, by realizing the bridge function by the wireless communication apparatus. Thus, if the bus is initialized due to pulling out the 1394 terminal equipment in any of the wired communication networks, advantageously, the initialization of the bus has no effect on other wired communication network. Further, since the wireless communication apparatus outputs only the data to be outputted to the wireless connection, the resources of the wireless connection can efficiently be used.

The wireless communication apparatus comprises signal intensity display means. Therefore, advantageously, the setting person can easily install the wireless communication apparatus at the most reception-sensitive position based on the signal intensity notified (the level of the buzzer sound, the display of the level meter, or the number of LEDs which emit light).

The wireless communication apparatus comprises the first directivity control means for controlling the directivity of the receiving antenna so that the radio signal, which is received via the receiving antenna, has the maximum intensity and the angle display means for displaying the directive angle of the receiving antenna. If the setting person installs the wireless communication apparatus at the imprecise opposed positions, advantageously, the setting person can install the wireless communication apparatus at the most reception-sensitive position based on the direction and the amount of displacement displayed.

The wireless communication apparatus comprises the first directivity control means for controlling the directivity of the receiving antenna so that the intensity of the radio signal received via the receiving antenna is maximum, and the adjusting direction display means. If the setting person installs the wireless communication apparatus at the imprecise opposed position, the setting person can easily install the wireless communication apparatus at the most reception-sensitive position because the direction in which the wireless communication apparatus is moved.

The wireless communication apparatus comprises the first directivity control means for controlling the directivity of the receiving antenna so that the intensity of the radio signal, which is received via the receiving antenna, is maximum. Therefore, if the setting person installs the wireless communication apparatus at the imprecise opposed position, the wireless communication apparatus can perform communication by establishing the wireless connection as long as the position is displaced within the communication tolerable range.

Further, the wireless communication apparatus comprises the first directivity control means for controlling the directivity of the receiving antenna so that the intensity of the radio signal, which is received via the receiving antenna, is maximum and the second directivity control means for controlling the directivity of the transmitting antenna so that it matches the directivity of the receiving antenna. Therefore, if the setting person installs the wireless communication apparatus at the imprecise opposed position, the communication tolerable range can be wide to perform communication by establishing the wireless connection.

The wireless communication apparatus receives no signal having the same radio frequency as radio frequency transmitted by the apparatus itself. Therefore, even if the reflecting signal is caused by reflecting the transmitting signal to the surface of the partition, the wireless communication apparatus can prevent the effect from the reflecting signal.

## Claims

1. A wireless communication network for communication between first and second rooms (111, 112) separated by a partition (19, 46, 47), and comprising first and second wireless communication apparatuses (15, 16, 48, 49, 61, 62, 81, 82, 194, 195, 501, 502, 503) having radio irradiating surfaces, said partition having a first surface facing said first room and a second surface facing said second room, which is **characterized in that**;
said first wireless communication apparatus is installed so that the radio irradiating surface thereof is adhered to the first surface of said first room, said second wireless communication apparatus is installed so that the radio irradiating surface thereof is adhered to the second surface of said second room and, thus, said first and second wireless communication apparatuses establish a wireless connection (110, 410, 411) by setting said partition as a radio transmitting medium.

2. A wireless communication apparatus according to Claim 1, wherein said first and second wireless communication apparatuses respectively have transmitting antenna (24) and receiving antenna (25) in which, when an irradiating angle or an angle of field of view is equal to 0° and ± 45° , an antenna gain is equal to a predetermined value or more.

3. A wireless communication network according to Claim 1 or 2, wherein said first and second wireless communication apparatuses respectively transmit a radio signal whose carrier frequency is 10 GHz or more, via said wireless connection.

4. A wireless communication network according to Claim 1, 2 or 3, wherein said first and second wireless communication apparatuses respectively transmit a radio signal whose carrier signal ranges 55 GHz to 65 GHz, via said wireless connection.

5. A wireless communication network according to Claim 2,3 or 4, wherein each of said first and second wireless communication apparatuses (15, 16, 48, 49, 501, 502, 503) comprises:
a first physical layer circuit (20, 20a) for transmitting data to a wired communication network (13, 14, 43, 44); and
a second physical layer circuit (28, 28a, 28b, 28c) for transmitting data via said wireless connection; and
a repeater function is implemented by transmitting data between said first physical layer circuit and said second physical layer circuit.

6. A wireless communication network according to Claim 5, wherein said wired communication network is a network which conforms to an IEEE 1394 standard.

7. A wireless communication network according to one of the procedding Claims wherein each of said first and second wireless communication apparatuses (61, 62, 81, 82,194,195) comprises:
a third physical layer circuit (71) for transmitting data to a wired communication network (13, 14, 43, 44);
a fourth physical layer circuit (28, 20b, 20c, 28a, 28b, 20d, 20e) for transmitting data via said wireless connection; and
a data link layer circuit (73, 101) for processing data inputted by said third physical layer circuit every data frame and outputting it to said fourth physical layer circuit, and processing data inputted by said fourth physical layer circuit every data frame and outputting to it said third physical layer circuit, and
said data link layer circuit outputs only data to be outputted to said third or fourth physical layer circuit to implement a bridge function.

8. A wireless communication network according to Claim 7, wherein said wired communication network is a network which conforms to an IEEE 1394 standard.

9. A wireless communication network according to one of the proceding Claims, wherein one of said first and second wireless communication apparatuses (61, 62) comprises:
a first physical layer circuit (20, 20a) for transmitting data to a wired communication network (13, 14); and
a second physical layer circuit (28, 28c) for transmitting data via said wireless connection (110), and
said first physical layer circuit transmits data to said second physical layer circuit to implement a repeater function, and
wherein the other of said first and second wireless communication apparatuses comprises:
a third physical layer circuit (71) for transmitting data to a wired communication network (13, 14);
a fourth physical layer circuit (20b, 28) for transmitting data via said wireless connection (110); and
a data link layer circuit (73) for processing data inputted by said third physical layer circuit every data frame and outputting it to said fourth physical layer circuit, and processing data inputted by said fourth physical layer circuit every data frame and outputting it to said third physical layer circuit, and
said data link layer circuit outputs only data to be outputted to said third or fourth physical layer circuit to implement a bridge function.

10. A wireless communication network according to Claim 9, wherein said wired communication network is a network which conforms to an IEEE 1394 standard.

11. A wireless communication apparatus which is **characterized in that**;
said apparatus is used for the wireless communication network according to any one of Claims 5, 7, and 9, and comprises signal intensity display means (116, 118) for displaying an intensity of a signal which is received from said wireless connection.

12. A wireless communication apparatus which is **characterized in that**;
said apparatus is used for the wireless communication network according to any one of Claims 5, 7, and 9, and comprises first directivity control means (121) for controlling a directivity of said receiving antenna so that an intensity of a radio signal received via said receiving antenna is maximum.

13. A wireless communication apparatus according to Claim 12, further comprising:
angle display means (123, 124) for displaying an acute angle formed by said first surface or said second surface of said partition to which said apparatus is installed, and a direction in which an antenna gain of said receiving antenna is maximum.

14. A wireless communication apparatus according to Claim 12, further comprising:
adjusting direction display means (123, 124) for displaying a direction in which closer to 90° is an acute angle formed by said first surface or said second surface of said partition to which said apparatus is installed, and a direction in which an antenna gain of said receiving antenna is maximum.

15. A wireless communication apparatus according to Claim 12, 13 or 14, further comprising:
second directivity control means (127) for controlling the directivity of said transmitting antenna so that it matches the directivity of said receiving antenna.

16. A wireless communication apparatus which is **characterized in that**;
said apparatus comprises:
a first physical layer circuit (20, 20a) for transmitting data to a wired communication network (13, 14, 43, 44); and
a second physical layer circuit (28, 28a, 28b) for transmitting data via a wireless connection (110, 410, 411), and
a repeater function is implemented by transmitting data between said first physical layer circuit and said second physical layer circuit.

17. A wireless communication apparatus according to Claim 16, further comprising:
a transmitting antenna (24); and
a receiving antenna (25),
wherein in said transmitting antenna and said receiving antenna, when an irradiating angle or an angle of field of view is equal to 0° and ± 45° , an antenna gain is equal to a predetermined value or more.

18. A wireless communication apparatus according to Claim 16, or 17, further comprising:
a frequency filter (26, 26a, 26b) for preventing the reception of a signal having the same radio as radio transmitted by said apparatus.

19. A wireless communication apparatus according to Claim 16, 17 or 18, wherein said apparatus has a radio irradiating surface and can be fixed by adhering said radio irradiating surface to a surface of a partition (19, 46, 47).

20. A wireless communication apparatus which is **characterized in that**;
said apparatus comprises:
a third physical layer circuit (71) for transmitting data to a wired communication network (13, 14, 43, 44);
a fourth physical layer circuit (28, 20b, 20c, 28a, 28b, 20d, 20e) for transmitting data via a wireless connection (110, 410, 411); and
a data link layer circuit (73, 101) for processing data inputted by said third physical layer circuit every data frame and outputting it to said fourth physical layer circuit, and processing data inputted by said fourth physical layer circuit every data frame and outputting it to said third physical layer circuit, and
said data link layer circuit outputs only data to be outputted to said third or fourth physical layer circuit to implement a bridge function.

21. A wireless communication apparatus according to Claim 20, further comprising:
a transmitting antenna (24); and
a receiving antenna (25),
wherein in said transmitting antenna and said receiving antenna, when an irradiating angle or an angle of field of view is equal to 0° and ± 45° , an antenna gain is equal to a predetermined value or more.

22. A wireless communication apparatus according to Claim 20, or 21, further comprising:
a frequency filter (26, 26a, 26b) for preventing the reception of a signal having the same radio as radio transmitted by said apparatus.

23. A wireless communication apparatus according to Claim 20, 21 or 22, wherein said apparatus has a radio irradiating surfacce and can be fixed by adhering said radio irradiating surface to a surface of a partition (19, 46, 47).
